# EUROPEAN PATENT APPLICATION

(11) **EP 4 102 397 A1**
(43) Date of publication of application: **14.12.2022**
(21) Application number: 20917614.8
(22) Date of filing: 14.09.2020
(51) Int. Cl.: G06F 40/289, G06F 40/30, G06F 40/284, G06F 16/35

(54) **TEXT INFORMATION PROCESSING METHOD AND APPARATUS, COMPUTER DEVICE, AND READABLE STORAGE MEDIUM**

(30) Priority: 03.02.2020 CN 202010078977
(71) Applicant: Huawei Technologies Co., Ltd., Shenzhen, Guangdong 518129, (CN)
(72) Inventor: DENG, Liqun, Shenzhen, Guangdong 518129 (CN); WEI, Jiansheng, Shenzhen, Guangdong 518129 (CN); ZHANG, Yang, Shenzhen, Guangdong 518129 (CN); WANG, Yasheng, Shenzhen, Guangdong 518129 (CN); SUN, Wenhua, Shenzhen, Guangdong 518129 (CN)
(74) Representative: Gill Jennings & Every LLP
(86) International application number: PCT/CN2020/115007
(87) International publication number: WO 2021/155662

(57) **Abstract**

A text information processing method and apparatus, a computer device, and a readable storage medium are applicable to emotional speech synthesis in the artificial intelligence field. When an emotion category is determined for a sentence in text, the processing method considers both a predicted emotion category of each sentence and an overall emotion category of the text in which the sentence is located, and the method generates speech information for the sentence in the text, to help generate, for the text, the speech information that better conforms to human emotion expression habits, and to improve a humanoid degree of a smart speech device.

## Description

This application claims priority to Chinese Patent Application No. 202010078977.0, filed with the China National Intellectual Property Administration on February 3, 2020 and entitled "TEXT INFORMATION PROCESSING METHOD AND APPARATUS, COMPUTER DEVICE, AND READABLE STORAGE MEDIUM", which is incorporated herein by reference in its entirety.

### TECHNICAL FIELD

This application relates to the field of information processing, and in particular, to a text information processing method and apparatus, a computer device, and a readable storage medium.

### BACKGROUND

Key technologies of a speech technology (Speech Technology) include an automatic speech recognition (ASR) technology, a text to speech (TTS) technology, and a voiceprint recognition technology. Enabling computers to listen, see, speak, and feel is the future development trends of human-computer interaction. Speech has become one of the most promising human-computer interaction modes in the future. In recent years, great progress has been made in the text to speech technology, and machine speech broadcast has been widely applied to devices such as a smart mobile terminal, a smart appliance, and a vehicle-mounted stereo. People require synthesized speech to be "highly realistic and emotional" rather than only "clear". Quality of the synthesized speech becomes an important factor of measuring competitiveness of a smart speech product.

However, there is a lack of research on generating, for text information, speech information that conforms to human emotion expression habits. This restricts development of humanoid robots.

### SUMMARY

Embodiments of this application provide a text information processing method and apparatus, a computer device, and a readable storage medium, to help generate, for text, speech information that conforms to human emotion expression habits, and to improve a humanoid degree of a smart speech device.

According to a first aspect, an embodiment of this application provides a text information processing method. The method includes: performing sentence partition on target text to obtain a sentence sequence; determining an emotion category of the target text; separately determining an initial emotion category of each sentence in the sentence sequence; determining a first key sentence from the sentence sequence based on the emotion category of the target text and the initial emotion category of each sentence in the sentence sequence, where an initial emotion category of the first key sentence is the same as the emotion category of the target text; obtaining a modified emotion category of a target sentence based on the initial emotion category of the first key sentence and a text feature of the target sentence, where the target sentence is a sentence adjacent to the first key sentence in the sentence sequence, and an initial emotion category of the target sentence is different from the emotion category of the target text; and generating speech information of the target sentence based on the modified emotion category of the target sentence.

Usually, the meaning of any sentence in text is not understood alone. Instead, people need the aid of context to understand the meaning of the sentence. Similarly, it is the same when people understand and express an emotion of any sentence in speech text. In this embodiment of this application, when the emotion category is determined for the sentence in the text, a predicted emotion category of each sentence and the overall emotion category of the text in which the sentence is located are both considered, and the method in this embodiment of this application generates the speech information for the sentence in the text, to help generate, for the text, the speech information that better conforms to human emotion expression habits, and to improve a humanoid degree of a smart speech device.

Because the text is unstructured data, to help a computer mine useful information from the text, the text needs to be converted into structured information that can be processed by the computer. The structured information is referred to as a text feature. The text feature is generally a multidimensional vector.

In a possible implementation, a text feature of the target text may be obtained based on a text feature of each sentence in the sentence sequence.

In a possible implementation, the performing sentence partition on target text includes: performing sentence partition on the target text according to an intonational phrase partition rule.

In a possible implementation, the performing sentence partition on target text includes: predicting prosodic information of the target text; and performing sentence partition on the target text on a per-intonational phrase basis to obtain the sentence sequence. Each sentence in the sentence sequence is an intonational phrase.

In a possible implementation, the prosodic information of the text may indicate a prosodic word, a prosodic phrase, and an intonational phrase in the target text.

The prosodic word is a group of syllables that are closely related and often pronounced together in an actual speech stream. Generally, the prosodic word in the target text may be predicted first.

The prosodic phrase is a medium rhythm block between the prosodic word and the intonational phrase. The prosodic phrase may be smaller than a syntactic phrase. The prosodic phrase generally includes one or more prosodic words. There may be a prosodic rhythm boundary between the prosodic words in the prosodic phrase, and the prosodic phrase has a stable phrase intonation mode and a phrase accent configuration mode. The prosodic phrase indicates that several prosodic words that form a prosodic phrase sound like sharing a rhythm group. After the prosodic word of the target text is predicted, the prosodic phrase in the target text may be predicted based on the predicted prosodic word.

The intonational phrase indicates that several prosodic phrases are connected together in a specific intonation mode. Generally, the intonational phrase includes one or more prosodic phrases. After the prosodic phrase of the target text is predicted, the intonational phrase in the target text may be predicted based on the predicted prosodic phrase.

In a possible implementation, a text feature of a first sentence in the sentence sequence may be obtained based on a text feature of each prosodic word in the first sentence. The first sentence may be any sentence in the sentence sequence.

In a possible implementation, the text feature of the prosodic word may be generated based on a word vector of the prosodic word and/or a location feature of the prosodic word.

In a possible implementation, the word vector of the prosodic word may be obtained by using a neural network. The neural network may be obtained by training a Word2Vec model, a GloVe model, or a Bert model.

In a possible implementation, the location feature of the prosodic word may indicate a location of the prosodic word in an intonational phrase in which the prosodic word is located. For example, the location feature of the prosodic word may be represented by a 25-dimensional vector. A first dimension to a tenth dimension of the vector indicate a sequence position of the prosodic word in the intonational phrase, an eleventh dimension to a twentieth dimension of the vector indicate a quantity of prosodic words in the intonational phrase, and a twenty-first dimension to a twenty-fifth dimension of the vector indicate a prosodic result of the prosodic word. For example, the prosodic result may indicate whether the prosodic word is at the end of the prosodic phrase or the intonational phrase.

In a possible implementation, the emotion category of the target text is preset, so that a user sets an emotion tone of the speech information based on a preference.

Alternatively, the emotion category of the target text may be obtained based on the text feature of the target text.

In a possible implementation, the separately determining an initial emotion category of each sentence in the sentence sequence is specifically: determining an initial emotion category of a to-be-determined sentence based on a text feature of the to-be-determined sentence in the sentence sequence.

In a possible implementation, the obtaining a modified emotion category of a target sentence based on the initial emotion category of the first key sentence, an initial emotion category of the target sentence, and a text feature of the target sentence is specifically: if an initial emotion category of another adjacent sentence, other than the first key sentence, of the target sentence is the same as the emotion category of the target text, obtaining the modified emotion category of the target sentence based on the initial emotion category of the first key sentence, the initial emotion category of the another adjacent sentence, and the text feature of the target sentence.

In a possible implementation, after the obtaining a modified emotion category of the target sentence, the method further includes: if the initial emotion category of the another adjacent sentence, other than the first key sentence, of the target sentence is different from the emotion category of the target text, obtaining a modified emotion category of the another adjacent sentence based on the modified emotion category of the target sentence and a text feature of the another adjacent sentence; and generating speech information of the another adjacent sentence based on the modified emotion category of the another adjacent sentence.

The key sentence is used as a center, and emotion categories of left and right non-key intonational phrases of the key sentence are sequentially modified, to help maintain coherence of emotion changes between adjacent sentences in the target text.

According to a second aspect, an embodiment of this application provides a text information processing apparatus. The apparatus includes one or more functional units configured to perform the method in any one of the first aspect or the possible implementations of the first aspect. These functional units may be implemented by hardware, or may be implemented by hardware executing corresponding software, or may be implemented by software in combination with necessary hardware.

In a possible implementation, the text information processing apparatus may include: a sentence partition module, configured to perform sentence partition on target text to obtain a sentence sequence; a determining module, configured to perform the following steps: determining an emotion category of the target text; separately determining an initial emotion category of each sentence in the sentence sequence; determining a first key sentence from the sentence sequence based on the emotion category of the target text and the initial emotion category of each sentence in the sentence sequence, where an initial emotion category of the first key sentence is the same as the emotion category of the target text; and obtaining a modified emotion category of a target sentence based on the initial emotion category of the first key sentence and a text feature of the target sentence, where the target sentence is a sentence adjacent to the first key sentence in the sentence sequence, and an initial emotion category of the target sentence is different from the emotion category of the target text; and a speech generation module, configured to generate speech information of the target sentence based on the modified emotion category that is of the target sentence and that is determined by the determining module.

In a possible implementation, the sentence partition module is configured to perform sentence partition on the target text according to an intonational phrase partition rule.

In a possible implementation, the emotion category of the target text is preset, or is obtained based on a text feature of the target text.

In a possible implementation, the determining module is configured to determine an initial emotion category of a to-be-determined sentence based on a text feature of the to-be-determined sentence in the sentence sequence.

In a possible implementation, the determining module is configured to: if an initial emotion category of another adjacent sentence, other than the first key sentence, of the target sentence is the same as the emotion category of the target text, obtain the modified emotion category of the target sentence based on the initial emotion category of the first key sentence, the initial emotion category of the another adjacent sentence, and the text feature of the target sentence.

In a possible implementation, the determining module is further configured to: after the obtaining a modified emotion category of the target sentence, if the initial emotion category of the another adjacent sentence, other than the first key sentence, of the target sentence is different from the emotion category of the target text, obtain a modified emotion category of the another adjacent sentence based on the modified emotion category of the target sentence and a text feature of the another adjacent sentence. The speech generation module is further configured to generate speech information of the another adjacent sentence based on the modified emotion category of the another adjacent sentence.

According to a third aspect, an embodiment of this application provides a computer device, including a processor and a memory. The memory is configured to store computer-executable instructions. When the computer device runs, the processor executes the computer-executable instructions stored in the memory, and the computer is enabled to perform the method according to any one of the first aspect or the possible implementations of the first aspect.

According to a fourth aspect, an embodiment of this application provides a computer-readable storage medium. The computer-readable storage medium stores instructions. When the computer instructions are run on a computer, the computer is enabled to perform the method according to any one of the first aspect or the possible implementations of the first aspect.

According to a fifth aspect, an embodiment of this application provides a computer program product including instructions. When the instructions are run on a computer, the computer is enabled to perform the method according to any one of the first aspect or the possible implementations of the first aspect.

According to a sixth aspect, an embodiment of this application provides a chip system. The chip system includes a processor, configured to support a computer device in implementing a function according to any one of the first aspect or the possible implementations of the first aspect. In a possible design, the chip system further includes a memory. The memory is configured to store program instructions and data that are necessary for a computer device. The chip system may include a chip, or may include a chip and another discrete component.

For technical effects brought by any implementation of the second aspect, the third aspect, the fourth aspect, the fifth aspect, and the sixth aspect, refer to technical effects brought by corresponding implementations of the first aspect. Details are not described herein again.

### BRIEF DESCRIPTION OF DRAWINGS

FIG. 1A is a schematic diagram of a possible application scenario according to an embodiment of this application;
FIG. 1B is a possible schematic diagram of a structure of a smart speech device according to an embodiment of this application;
FIG. 1C is a schematic diagram of another possible application scenario according to an embodiment of this application;
FIG. 1D is a possible schematic diagram of a structure of a server according to an embodiment of this application;
FIG. 2 is a schematic diagram of a possible embodiment of a text information processing method according to this application;
FIG. 3 is a schematic diagram of performing sentence partition on target text according to this application;
FIG. 4 is a possible detailed schematic flowchart of step 201;
FIG. 5-1A is a schematic diagram of an embodiment of a first-phase process of a text information processing method according to this application;

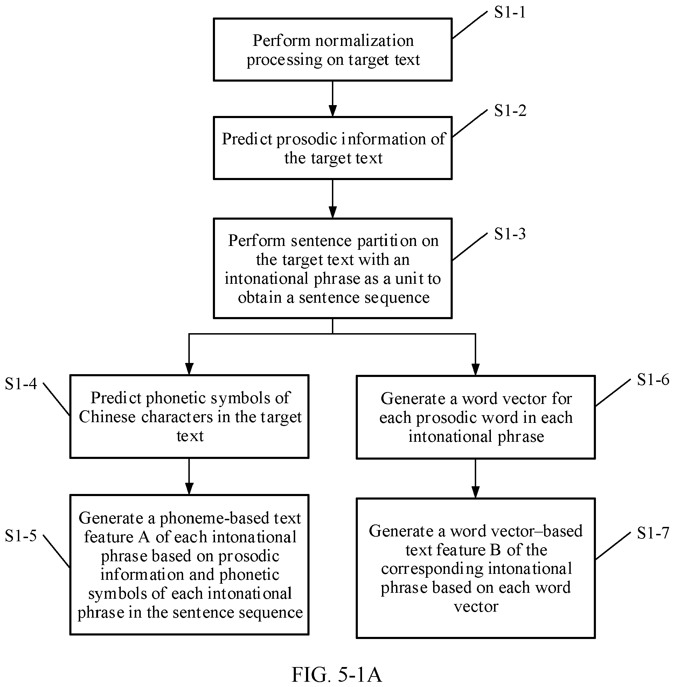

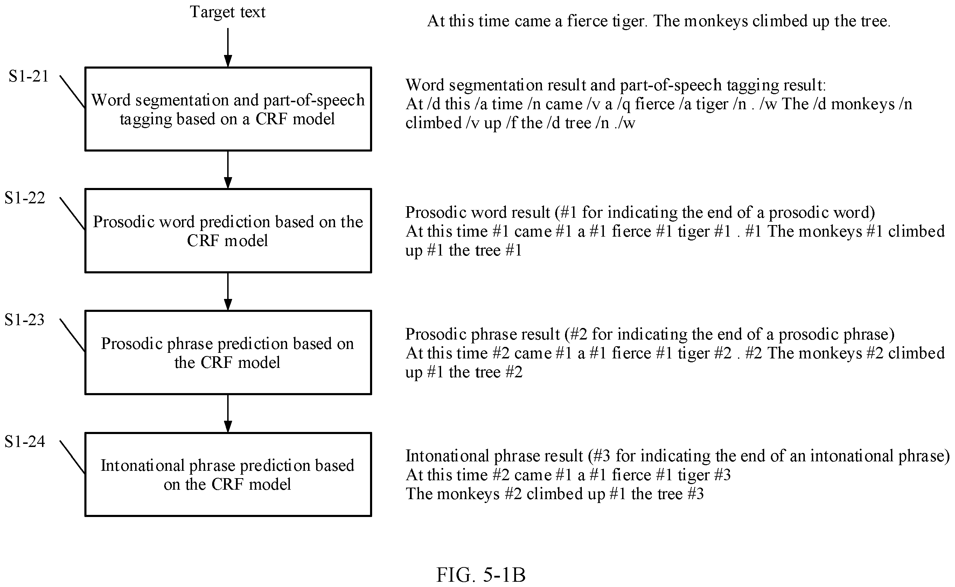

FIG. 5-1B is a schematic diagram of a possible embodiment of a method for predicting prosodic information based on a CRF model according to this application;

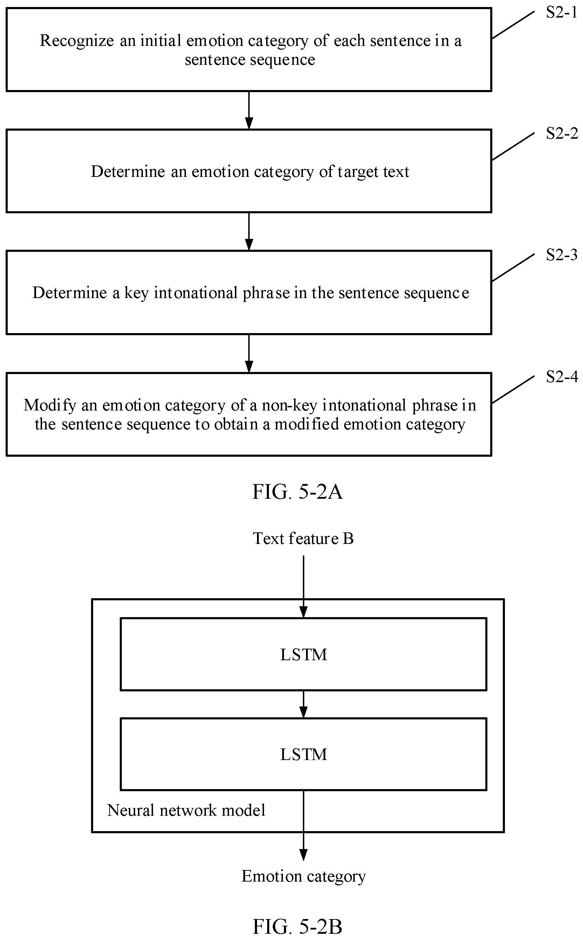

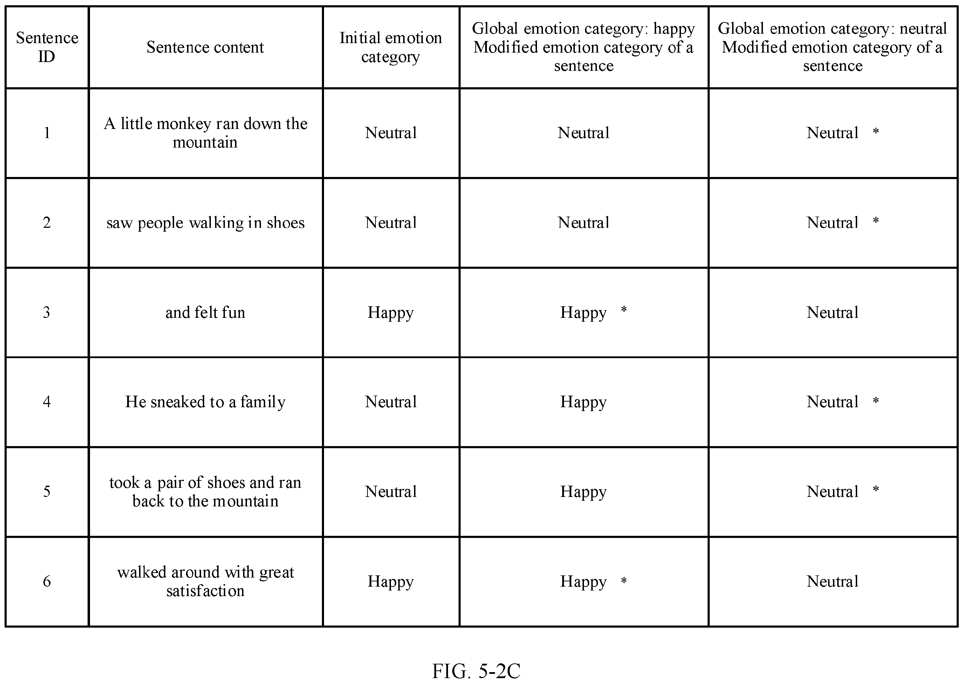

FIG. 5-2A is a schematic diagram of an embodiment of a second-phase process of a text information processing method according to this application;
FIG. 5-2B is a possible schematic diagram of a structure of an emotion category classification model according to this application;
FIG. 5-2C illustrates a possible prediction result of an initial emotion category of each intonational phrase in a story "Monkey Wearing Shoes" and a modified emotion category in different global emotions according to a method in this application;

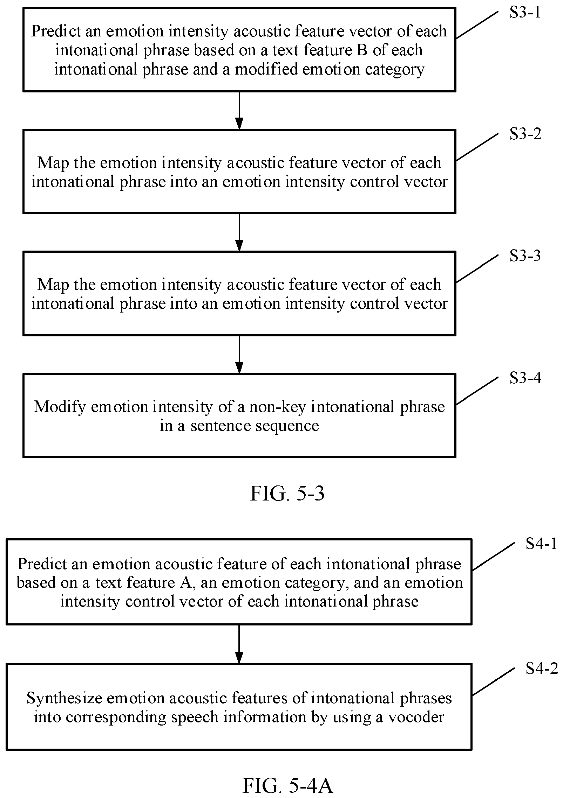

FIG. 5-3 is a schematic diagram of an embodiment of a third-phase process of a text information processing method according to this application;

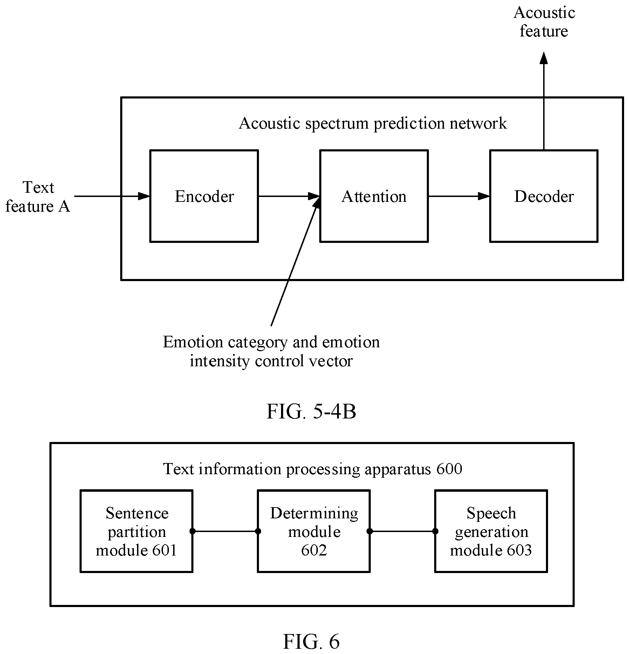

FIG. 5-4A is a schematic diagram of an embodiment of a fourth-phase process of a text information processing method according to this application;
FIG. 5-4B is a possible schematic diagram of a structure of an emotion acoustic model according to this application; and
FIG. 6 is a schematic diagram of a possible embodiment of a text information processing apparatus according to this application.

### DESCRIPTION OF EMBODIMENTS

The following describes embodiments of this application with reference to the accompanying drawings.

Key technologies of a speech technology (Speech Technology) include an automatic speech recognition (ASR) technology, a text to speech (TTS) technology, and a voiceprint recognition technology. Enabling computers to listen, see, speak, and feel is the future development trends of human-computer interaction. Speech has become one of the most promising human-computer interaction modes in the future.

The present invention proposes a text information processing method, which may be applied to a computer device to implement emotional speech synthesis.

An application scenario in embodiments of this application is described first.

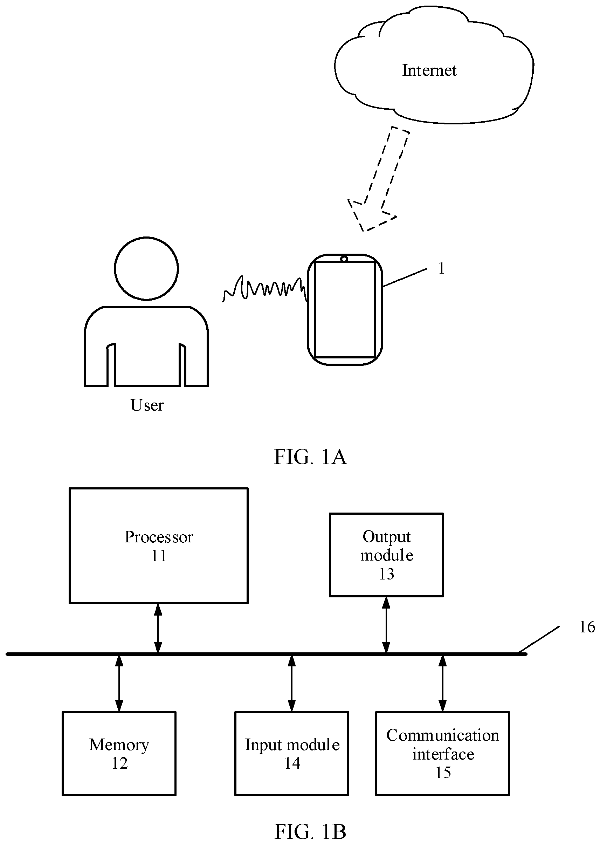

For example, FIG. 1A is a schematic diagram of a possible application scenario according to an embodiment of this application. In the application scenario corresponding to FIG. 1A, the computer device may be an entity (referred to as an intelligent voice device 1) that has emotion analysis and processing capabilities and speech synthesis and output capabilities. For example, the smart speech device 1 may be a smartphone, an intelligent voice assistant on a wearable terminal that can make a sound, a smart speaker, a robot that can talk with a person, or the like. In FIG. 1A, for example, the smart speech device 1 is a smartphone. The smartphone 1 may convert text obtained through the Internet (represented by a dashed arrow in FIG. 1A) or locally stored into emotional speech information, and output the emotional speech information to a user (represented by a fluctuating curve in FIG. 1A).

FIG. 1B is a schematic diagram of an embodiment of the smart speech device 1 according to this application. The smart speech device may include a processor 11, a memory 12, and a speech output module 13. The memory 12 is configured to store a computer program. The processor 11 is configured to execute the computer program in the memory 12, to perform the text information processing method provided in this application. The speech output module 13 is configured to output the emotional speech information to the user (a person or another robot). For example, the output module 13 may be a speaker.

In a possible implementation, the smart speech device 1 may further include an input module 14. The input module 14 may include one or more of a touchscreen, a camera, a microphone array, and the like. The touchscreen is configured to receive a touch instruction of the user. The camera is configured to detect image information. The microphone array is configured to detect audio data.

In a possible implementation, the smart speech device 1 further includes a communication interface 15, configured to communicate with another device (for example, a server).

In a possible implementation, the modules in the smart speech device may be connected to each other through a bus 16.

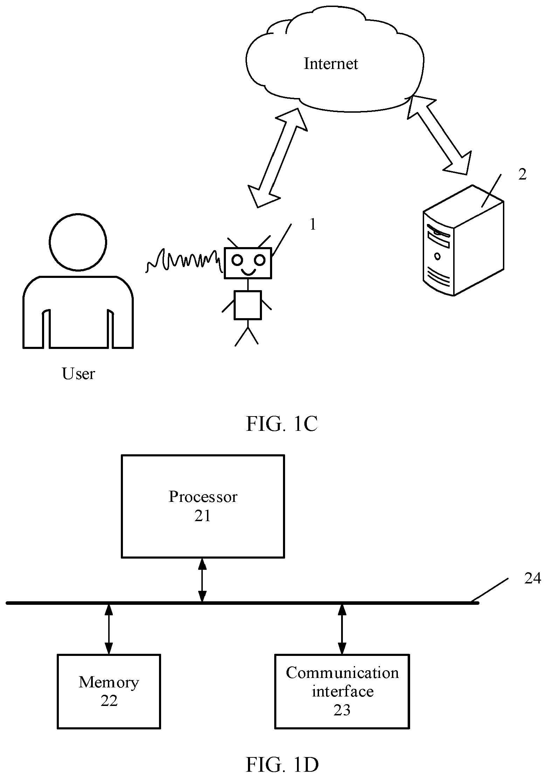

For example, FIG. 1C is a schematic diagram of another possible application scenario according to an embodiment of this application. In the application scenario corresponding to FIG. 1C, the computer device may be a server 2. The server 2 may be communicatively connected to the smart speech device 1. In FIG. 1C, for example, the smart speech device 1 is a robot. When the robot 1 communicates with the user, the server 2 may convert text obtained through the Internet or sent by the robot 1 into emotional speech information, and send the obtained speech information to the robot 1. The robot 1 outputs the emotional speech information to the user (represented by a fluctuating curve in FIG. 1C).

Alternatively, still refer to FIG. 1C. In another application scenario corresponding to FIG. 1C, the computer device may include a smart speech device 1 and a server 2 that are communicatively connected. The intelligent robot 1 and the server 2 may cooperate with each other to jointly implement functions of emotion analysis and processing and speech synthesis. For example, the server 2 implements the functions of emotion analysis and processing, and the intelligent robot 1 implements speech synthesis and speech output based on an emotion processing result of the server 2.

As shown in FIG. ID, an embodiment of this application further provides a server 2. The server 2 may include a processor 21 and a memory 22. The memory 22 is configured to store a computer program. The processor 21 is configured to execute the computer program in the memory 22, to perform the text information processing method provided in this application.

In a possible implementation, the processor 21 and the memory 22 may be connected to each other through a bus 24.

In a possible implementation, the server 2 may further include a communication interface 23, configured to communicate with another device (for example, the smart speech device 1).

The processor in FIG. 1B and/or FIG. 1D may be a central processing unit (central processing unit, CPU), a network processor (network processor, NP), a combination of a CPU and an NP, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component. The methods, steps, and logical block diagrams that are disclosed in this application may be implemented or performed. A general-purpose processor may be a microprocessor, or the processor may be any conventional processor, or the like. Steps of the methods disclosed in this application may be directly executed and completed by using a hardware decoding processor, or may be executed and completed by using a combination of hardware and software modules in the decoding processor. The software module may be located in a storage medium mature in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor. Although only one processor is shown in the figure, the apparatus may include a plurality of processors, or the processor includes a plurality of processing units. Specifically, the processor may be a single-core processor, or may be a multi-core or many-core processor. The processor may be an ARM architecture processor.

The memory in FIG. 1B and/or FIG. 1D is configured to store computer instructions executed by the processor. The memory may be a storage circuit, or may be a memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. The memory may be independent of the processor. In a possible implementation, the processor and the memory may be connected to each other through a bus. The bus may be a peripheral component interconnect (peripheral component interconnect, PCI) bus or an extended industry standard architecture (extended industry standard architecture, EISA) bus, or the like. The bus may be classified into an address bus, a data bus, a control bus, and the like. Alternatively, the memory may be a storage unit in the processor, and is directly attached (attach) to the processor. This is not limited herein. Although only one memory is shown in the figure, the apparatus may include a plurality of memories, or the memory includes a plurality of storage units.

The following describes methods provided in embodiments of this application.

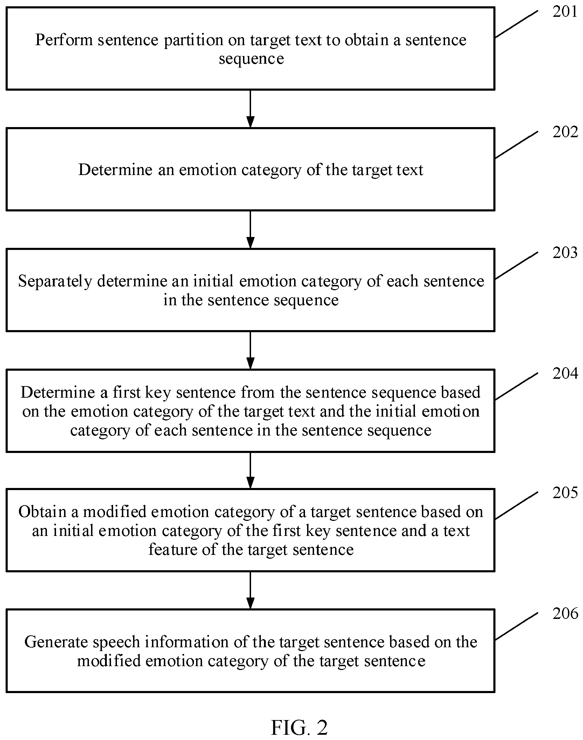

As shown in FIG. 2, an embodiment of a text information processing method in this application may include the following steps.

201: Perform sentence partition on target text to obtain a sentence sequence.

The computer device may obtain text to be converted into speech information. The text is referred to as a target text. An excessively long sentence is inconvenient for subsequent speech generation. Therefore, sentence partition may be performed on the target text to obtain the sentence sequence. The target text is partitioned into shorter sentence units, to facilitate subsequent speech generation.

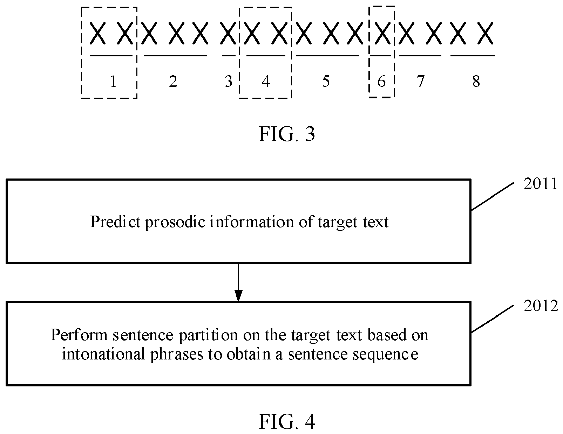

For ease of understanding, the following describes step 201 by using an example. In FIG. 3, a plurality of cross symbols represent content of the target text. Each cross symbol may represent one or more characters. The characters herein may be Chinese characters, or may be non-Chinese characters (for example, Arabic numerals or English symbols). FIG. 3 shows eight horizontal lines. Cross symbols over a same horizontal line are grouped into a same sentence. The eight horizontal lines represent that sentence partition is performed on the target text to obtain eight sentences. For ease of description, numbers below the horizontal lines represent corresponding sentences. The sentences in the sentence sequence are successively: a sentence 1, a sentence 2, ..., and a sentence 8.

202: Determine an emotion category of the target text.

After the target text is obtained, the emotion category of the target text may be determined. The emotion category of the target text is an emotion category corresponding to the target text.

In a possible implementation, the emotion category of the target text may be set before delivery, or may be set by a user based on a requirement. Alternatively, in a possible implementation, the emotion category of the target text may be predicted according to an algorithm. In a possible implementation, an initial emotion category of the target text may be predicted based on a text feature of the target text. For example, the text feature of the target text may be input into a trained neural network, and the neural network is configured to predict an emotion category of text, so that the emotion category of the target text can be obtained.

Because text is unstructured data, to help a computer mine useful information from the text, the text needs to be converted into structured information that can be processed by the computer. The structured information is referred to as a text feature. The text feature is generally a multidimensional vector.

203: Separately determine an initial emotion category of each sentence in the sentence sequence.

After the sentence sequence is obtained, an emotion category (referred to as the initial emotion category) of each sentence may be predicted according to an algorithm.

In a possible implementation, for any sentence whose initial emotion category is to be determined (referred to as a to-be-determined sentence for short) in the sentence sequence, the initial emotion category of the to-be-determined sentence may be determined based on a text feature of the to-be-determined sentence. For example, the text feature of the to-be-determined sentence may be input into a trained neural network, and the neural network is configured to classify emotion categories of sentences or predict emotion categories of sentences, so that the emotion category of the sentence can be obtained.

For example, the neural network may be constructed by using a classification model such as a deep neural network, a support vector machine, or a hidden Markov model, and pre-trained based on a training corpus.

204: Determine a first key sentence from the sentence sequence based on the emotion category of the target text and the initial emotion category of each sentence in the sentence sequence.

After the emotion category of the target text and the initial emotion category of each sentence in the sentence sequence are determined, a sentence whose initial emotion category is the same as the emotion category of the target text may be determined from the sentence sequence, and is referred to as a key sentence. The initial emotion category of the key sentence is the same as the emotion category of the target text.

For example, as shown in FIG. 3, it is assumed that the emotion category of the target text is A, and initial emotion categories of the sentence 1, the sentence 5, and the sentence 7 are A. It may be determined that the sentence 1, the sentence 5, and the sentence 7 are key sentences in the sentence sequence. In FIG. 3, the key sentences are identified by using dashed boxes.

For ease of description, a key sentence of the target text is referred to as the first key sentence.

205: Obtain a modified emotion category of a target sentence based on an initial emotion category of the first key sentence and a text feature of the target sentence.

After the first key sentence in the sentence sequence is determined, and the initial emotion category of each sentence in the sentence sequence is determined, an emotion category of a sentence other than the key sentence in the sentence sequence may be modified.

Specifically, a sentence (referred to as the target sentence) that meets the following condition may be determined from the sentence sequence: The sentence is adjacent to the first key sentence, and the initial emotion category is different from the emotion category of the target text. Then, the modified emotion category of the target sentence may be obtained based on the initial emotion category of the first key sentence (namely, the emotion category of the target text) and the text feature of the target sentence.

The sentence sequence in FIG. 3 is still used as an example. It is assumed that initial emotion categories of the sentence 2, the sentence 3, the sentence 4, the sentence 6, and the sentence 8 in the sentence sequence are successively: B, C, D, B, and C. If the sentence 1 is a first key sentence, the sentence 2 is a target sentence. If the sentence 5 is a first key sentence, both the sentence 4 and the sentence 6 are target sentences. If the sentence 7 is a first key sentence, both the sentence 6 and the sentence 8 are target sentences. For example, the sentence 1 is the first key sentence, and the sentence 2 is the target sentence. A modified emotion category of the sentence 2 may be obtained based on the emotion category A and a text feature of the sentence 2.

206: Generate speech information of the target sentence based on the modified emotion category of the target sentence.

After the modified emotion category of the target sentence is obtained, the speech information of the target sentence may be generated based on the modified emotion category of the target sentence. Then, the speech information is played by a voice playing module, so that when text content of the target sentence is output, an emotion corresponding to the modified emotion category of the target sentence can be expressed.

Usually, the meaning of any sentence in text is not understood alone. Instead, people need the aid of context to understand the meaning of the sentence. Similarly, it is the same when people understand and express an emotion of any sentence in speech text. In this embodiment of this application, the emotion category of the sentence in the text may be determined, and the speech information that can express an emotion of the emotion category is generated for the corresponding short sentence. In this embodiment of this application, when the emotion category is determined for the sentence, a predicted emotion category of each sentence and the overall emotion category of the text in which the sentence is located are both considered, and the method in this embodiment of this application generates the speech information for the sentence in the text, to help generate, for the text, the speech information that better conforms to human emotion expression habits, and to improve a humanoid degree of a smart speech device.

The step execution sequence corresponding to the step numbers in this embodiment of this application is merely used as a possible execution sequence. For example, a time sequence relationship between step 202 and step 201 and between step 202 and step 203 is not limited in this embodiment of this application, provided that step 202 is performed before step 204.

In a possible implementation, speech information of the first key sentence may be generated based on the initial emotion category of the first key sentence. Then, the speech information is played by the voice playing module, so that when text content of the first key sentence is output, an emotion corresponding to the initial emotion category of the first key sentence can be expressed.

In a possible implementation, after the initial emotion category of the key sentence and the modified emotion category of the non-key sentence are determined, speech of each sentence may be generated based on each sentence and the emotion category corresponding to each sentence, and then speech of sentences may be spliced into speech of the target text based on a sequence position of each sentence in the sentence sequence.

In a possible implementation, when it is determined that another adjacent sentence, other than the first key sentence, of the target sentence is a key sentence (in other words, an initial emotion category of the another adjacent sentence is the same as the emotion category of the target text), step 205 may be specifically:

The modified emotion category of the target sentence is obtained based on the initial emotion category of the first key sentence, the initial emotion category of the another adjacent sentence, and the text feature of the target sentence.

As shown in FIG. 3, it is assumed that the first key sentence is the sentence 5, and the target sentence is the sentence 6. Because the sentence 7 is a key sentence, a modified emotion category of the sentence 6 may be obtained based on the emotion category A, the emotion category A, and the text feature of the target sentence.

In a possible implementation, if initial emotion categories of a first sentence and a second sentence in the sentence sequence are the same and different from the emotion category of the target text, only one adjacent sentence of the first sentence is a key sentence, and two adjacent sentences of the second sentence are both key sentences, compared with a modified emotion category of the first sentence, a modified emotion category of the second sentence is closer to the emotion category of the target text.

For step 201, a common sentence partition manner is to perform sentence partition on the target text based on punctuations (such as a comma, a period, and an exclamation mark) in the target text. A granularity of sentence partition performed on the text determines a delicate degree of emotions that can be expressed by the text speech. A larger granularity, for example, the target text as a sentence, indicates that the speech information of the target text can express only one emotion category. A sentence obtained through partition based on punctuation may include a large amount of content. The speech information that is of the target text and that is generated by using such a sentence as a minimum granularity cannot reflect emotion fluctuation in the sentence, and is not conducive to improving the delicate degree of emotions that can be expressed by the text speech.

In a possible implementation, step 201 may include: performing phrase partition on target text according to an intonational phrase partition rule to obtain a sentence sequence.

In a possible implementation, as shown in FIG. 4, step 201 may specifically include the following steps.

2011: Predict prosodic information of the target text.

Prosodic information of the text may indicate a prosodic word, a prosodic phrase, and an intonational phrase in the target text.

The prosodic word is a group of syllables that are closely related and often pronounced together in an actual speech stream. Generally, the prosodic word in the target text may be predicted first.

The prosodic phrase is a medium rhythm block between the prosodic word and the intonational phrase. The prosodic phrase may be smaller than a syntactic phrase. The prosodic phrase generally includes one or more prosodic words. There may be a prosodic rhythm boundary between the prosodic words in the prosodic phrase, and the prosodic phrase has a stable phrase intonation mode and a phrase accent configuration mode. The prosodic phrase indicates that several prosodic words that form a prosodic phrase sound like sharing a rhythm group. After the prosodic word of the target text is predicted, the prosodic phrase in the target text may be predicted based on the predicted prosodic word.

The intonational phrase indicates that several prosodic phrases are connected together in a specific intonation mode. Generally, the intonational phrase includes one or more prosodic phrases. After the prosodic phrase of the target text is predicted, the intonational phrase in the target text may be predicted based on the predicted prosodic phrase.

2012: Perform sentence partition on the target text on a per-intonational phrase basis to obtain the sentence sequence.

After the intonational phrase of the target text is predicted, sentence partition may be performed on the target text on a per-intonational phrase basis to obtain the sentence sequence. Each sentence in the sentence sequence is an intonational phrase.

Compared with sentence partition on the target text based on a punctuation, sentence partition on the target text based on an intonational phrase leads to a smaller sentence granularity. This helps reflect emotion fluctuation of a sentence between two punctuations, and helps improve a delicate degree of emotions that can be expressed by the text speech. In addition, an experimental result shows that sentence partition is performed with intonational phrases being units to predict the emotion category of the sentence, so that emotion prediction can be more controllable without causing negative impact on a prosody of synthesized speech.

In a possible implementation, a text feature of the target text may be obtained based on a text feature of each sentence in the sentence sequence.

In a possible implementation, a text feature of a first sentence in the sentence sequence may be obtained based on a text feature of each prosodic word in the first sentence. The first sentence may be any sentence in the sentence sequence.

In a possible implementation, the text feature of the prosodic word may be generated based on a word vector of the prosodic word and/or a location feature of the prosodic word.

For example, the word vector of the prosodic word may be obtained by using a neural network. The neural network may be obtained by training a Word2Vec model, a GloVe model, or a Bert model.

In a possible implementation, the location feature of the prosodic word may indicate a location of the prosodic word in an intonational phrase in which the prosodic word is located. For example, the location feature of the prosodic word may be represented by a 25-dimensional vector. A first dimension to a tenth dimension of the vector indicate a sequence position of the prosodic word in the intonational phrase, an eleventh dimension to a twentieth dimension of the vector indicate a quantity of prosodic words in the intonational phrase, and a twenty-first dimension to a twenty-fifth dimension of the vector indicate a prosodic result of the prosodic word. For example, the prosodic result may indicate whether the prosodic word is at the end of the prosodic phrase or the intonational phrase.

In a possible implementation, after a text feature and an emotion category of each sentence (an initial emotion category of a key sentence and a modified emotion category of a non-key sentence) are obtained, emotion intensity of each sentence may be predicted based on the text feature and the emotion category of each sentence. Specifically, it is assumed that the first sentence is any sentence in the sentence sequence. In a possible implementation, an initial emotion intensity control vector of the first sentence may be predicted based on the text feature and an emotion category of the first sentence. Global emotion intensity of the target text may be determined. Then, modified emotion intensity of the first sentence is determined based on the global emotion intensity level and the initial emotion intensity control vector of the first sentence.

In a possible implementation, a first intensity difference of a target sentence is greater than a second intensity difference of the target sentence. The first intensity difference of the target sentence is a difference between initial emotion intensity of the target sentence and the global emotion intensity of the target text. The second intensity difference of the target sentence is a difference between modified emotion intensity of the target sentence and the global emotion intensity of the target text.

In a possible implementation, speech information of the target sentence may be generated based on a modified emotion category of the target sentence and the modified emotion intensity of the target sentence.

The following describes a possible embodiment of a text information processing method in this application in an example of emotional speech synthesis of text "Monkey Wearing Shoes". This embodiment is based on a speech synthesis framework of an end-to-end acoustic model (for example, Tacotron), and is used to perform emotional speech synthesis processing on a large paragraph of text.

Content of the children's story "Monkey Wearing Shoes" is as follows:
"A little monkey ran down the mountain, saw people walking in shoes, and felt fun. He sneaked to a family, took a pair of shoes and ran back to the mountain, and walked around with great satisfaction. At this time came a fierce tiger. The monkeys climbed up the tree. The little monkey couldn't climb the tree in shoes. Monkey mom yelled "throw away the shoes". The little monkey threw away his shoes and quickly climbed up the tree, and never again imitated others."

The foregoing content of "Monkey Wearing Shoes" is used as the target text. The following describes a possible specific embodiment of the target text processing method in this application. Another possible embodiment of the text information processing method in this application may include the steps of the following several phases.

As shown in FIG. 5-1A, a first phase S1 may include the following steps.

S1-1: Perform normalization processing on the target text.

Non-Chinese characters in the text to be synthesized, such as Arabic numerals, English symbols, and various symbols, are converted into corresponding Chinese characters based on context semantics. In this embodiment, a rule-based method is used. To be specific, a rule set is collected and defined, and the text to be normalized matches these rules one by one to obtain corresponding specification measures. The text of "Monkey Wearing Shoes" used in this embodiment is normalized Chinese text. For another example, a sentence "Please dial 110 in case of difficulties" matches a rule "(dial | connect | phone | press | contact | call) (110 | 120 |119 | 112 | 911)". Therefore, according to the rule, it is determined that the numbers should be normalized according to a telegraph reading method.

S1-2: Predict prosodic information of the target text.

The prosodic information of the target text is predicted. The prosodic information indicates a prosodic structure in the target text. The prosodic structure includes a prosodic word, a prosodic phrase, and an intonational phrase. The prosodic information is predicted sequentially at different levels of prosodic structures, for example, the prosodic word, the prosodic phrase, and the intonational phrase. Ends of different prosodic structures are reflected as different pause time lengths in synthesized speech. To accurately predict the prosodic information, word segmentation and part-of-speech tagging prediction usually need to be performed on the text in advance, and then prediction is performed sequentially at levels of the prosodic word, the prosodic phrase, and the intonational phrase.

FIG. 5-1B shows an example of prosody prediction based on a condition random forest (condition random forest, CRF) model in this embodiment. Input text is the third sentence in Table 1. A flowchart in FIG. 5-1B illustrates a possible detailed procedure of S1-2. Text on the right of each step in the flowchart indicates an example of a result of the corresponding step.

As shown in FIG. 5-1B, step S1-2 includes the following steps.

S1-21: Word segmentation and part-of-speech tagging based on the CRF model.

"/" indicates the end of word segmentation, and a letter indicates a part-of-speech of a previous segmented word.

For example, "a" may indicate an adjective, "d" indicates an adverb, "f" indicates an orientation, "m" indicates a number, "n" indicates a noun, "q" indicates a quantifier, "r" indicates a pronoun, "u" indicates an auxiliary word, "v" indicates a verb, and "w" indicates punctuation.

S1-22: Prosodic word prediction based on the CRF model.

S1-23: Prosodic phrase prediction based on the CRF model.

S1-24: Intonational phrase prediction based on the CRF model.

The third sentence in Table 1 includes two intonational phrases: "At this time came a fierce tiger" and "the monkeys climbed up the tree".

S1-3: Perform sentence partition on the target text on a per-intonational phrase basis to obtain the sentence sequence.

An excessively long sentence is inconvenient for subsequent speech generation. Therefore, in this step, a large paragraph of input text is partitioned into shorter sentence units, to facilitate subsequent speech generation. A common partition manner is to partition a large paragraph of text into sentences based on punctuations (such as a period and an exclamation mark). However, in this embodiment, an intonational phrase at a smaller granularity is used as a short sentence result obtained through partition, and any sentence in the sentence sequence is an intonational phrase. In a subsequent step, emotion feature prediction and speech generation are performed by using an intonational phrase as a synthesis unit, because experiments show that emotion feature conversion can be more controllable by using an intonational phrase as a synthesis unit, without causing negative impact on a prosody of synthesized speech. In other words, in the example shown in FIG. 5-1B, a corresponding input sentence is partitioned into two intonational phrases for subsequent synthesis steps.

S1-4: Predict phonetic symbols of Chinese characters in the target text.

Corresponding pinyin is predicted for the Chinese characters in the intonational phrases. As shown in FIG. 5-1B, character phonetic symbol results of the two intonational phrases are as follows:
zhe4 shi2 lai2 le5 yi4 zhi1 xiong1 meng3 de5 lao2 hu3; and
hou2 zi5 men5 fen1 fen5 pa2 shang4 le5 shu4.

A number following pinyin indicates a tone of a Chinese character. For example, "1" indicates the first tone, "2" indicates the second tone, "3" indicates the third tone, "4" indicates the fourth tone, and "5" indicates another tone, for example, a light tone.

S1-5: Generate a phoneme-based text feature A of each intonational phrase based on prosodic information and phonetic symbols of each intonational phrase in the sentence sequence.

After processing in steps S1-1 to SI-4, in this step, the foregoing features may be combined into a phoneme-level text feature (referred to as the text feature A) including the foregoing features. In this way, the text feature A of each intonational phrase indicates pinyin, prosodic words, prosodic phrases, and the like of the corresponding intonational phrase. Results of the phoneme-based text feature A of the two intonational phrases obtained in FIG. 5-1B are as follows:
^ #0 zhe4 #0 shi2 #2 lai2 #0 le5 #yi4 #0 zhi1 #1 xiongl #0 meng3 #0 de5#1 lao2 #0 hu3#3 $; and
^ #0 hou2 #0 zi5 #0 men5 #2 fen1 #0 fen5 #1 pa2 #0 shang4 #0 le5 #1 shu4 #3 $.

Herein, ^ indicates a start symbol of a sentence, $ indicates an end symbol of a sentence, and #0, #1, #2, and #3 indicate syllables, prosodic words, prosodic phrases, and intonational phrases, respectively.

S1-6: Generate a word vector for each prosodic word in each intonational phrase.

During word vector generation, each prosodic word in each intonational phrase is converted into the corresponding word vector by using a pre-trained word vector model (a Word2Vec model or another model such as GloVe or Bert in this embodiment) on a per-intonational phrase basis. For example, for the intonational phrase "at this time came a fierce tiger", the prosodic word "this time", "came", "a", "fierce", and "tiger" are converted into a 200-dimensional word vector by using the Word2Vec model.

SI-7: Generate a word vector-based text feature B of the corresponding intonational phrase based on each word vector.

For each intonational phrase, the word vector and context feature of each word in the intonational phrase are combined to generate an intonational phrase-level text feature. For example, the combination operation may specifically be a splicing operation. For example, finally a feature corresponding to each word includes a 200-dimensional word feature vector and a 25-dimensional context feature. The context feature may use a one-hot (one-hot) encoding manner to represent a location of the current word in the intonational phrase, a quantity of prosodic words in the current intonational phrase, a prosodic result of the current word, and the like.

After the first phase S1 is completed, steps of a second phase S2 may be performed. As shown in FIG. 5-2A, the second phase may specifically include the following steps.

S2-1: Recognize an initial emotion category of each intonational phrase.

A pre-trained text emotion classification model is used, and the text feature B that is of each intonational phrase and that is output in S1-7 is used as an input of the classification model, to separately determine the initial emotion category corresponding to each intonational phrase.

The text emotion classification model may be constructed by using a classification model such as a deep neural network, a support vector machine, or a hidden Markov model, and pre-trained based on a training corpus. In this embodiment, a recurrent neural network model, namely, a two-layer long short-term memory (long short-term memory, LSTM) network shown in FIG. 5-2B, is used as an emotion category classification model.

S2-2: Determine a global emotion category corresponding to the target text.

An emotion category of a current large paragraph of text, or referred to as a global emotion category, may be specified by a user in advance, or may be automatically recognized by using the emotion classification model. If the latter, text features B of all intonational phrases are used as input features, and recognition is performed by using the pre-trained text emotion classification model described in S2-1.

The "user" herein may include a developer of an intelligent terminal program, or may be a user of an intelligent terminal. A preferred global emotion may be set to a positive (or optimistic) emotion, for example, happy.

S2-3: Determine a key intonational phrase.

Based on recognition results of S2-1 and S2-2, an intonational phrase whose emotion category obtained in S2-1 is consistent with the emotion category obtained in S2-2 is identified as the key intonational phrase. An emotion category of the key intonational phrase is not changed in subsequent steps.

S2-4: Modify an emotion category of a non-key intonational phrase in the sentence sequence to obtain a modified emotion category.

A specific method is to train a context-based emotion category modification model based on emotion text training data in advance. As shown in FIG. 5-2B, the model is a two-layer LSTM neural network model, and may be trained based on a large amount of emotional speech data for a recognition task. An input of the model is obtained by splicing emotion categories of left and right intonational phrases of a to-be-modified current intonational phrase, a global emotion category, a text feature A of the current intonational phrase, and the like. An output is an emotion category of the current intonational phrase. The key intonational phrase is used as a center, and the emotion category modification model is used to sequentially modify emotion categories of left and right non-key intonational phrases of the key intonational phrase, until category features of all non-key intonational phrases are modified.

FIG. 5-2C shows an example of an initial emotion category of each intonational phrase in a story "Monkey Wearing Shoes" and a modified emotion category in different global emotions. In a column corresponding to the modified emotion category, a symbol "^{∗}" indicates the key intonational phrase determined in S2-3. As shown in FIG. 5-2C, under impact of the global emotion category, initial emotion categories of some non-key intonational phrases are modified, so that the modified emotion categories are different from the initial emotion category.

After the second phase is completed, steps of a third phase S3 may be performed. As shown in FIG. 5-3, the third phase S3 may specifically include the following steps.

S3-1: Predict an emotion intensity acoustic feature vector of each intonational phrase based on a text feature B of each intonational phrase and a modified emotion category.

In this step, a pre-trained emotion intensity acoustic feature prediction model is used. The text feature B that is of the intonational phrase and that is obtained in S1 and the emotion category obtained in S2 are used as an input, and an emotion acoustic feature vector is output. The emotion intensity acoustic feature prediction model is constructed by using a neural network model of a two-layer bidirectional long short-term memory (bidirectional long short-term memory, BLSTM) network and a two-layer deep neural network (deep neural network, DNN) layer, and is pre-trained based on a prepared emotion training corpus. An input of the model is obtained by splicing a text feature B of an intonational phrase represented by a word vector and an emotion category of the intonational phrase. An output is a seven-dimensional emotion intensity acoustic feature vector of the intonational phrase shown in the following table.

**Table 1**

| Energy | | | Speech speed | Logarithmic fundamental frequency | | |
|---|---|---|---|---|---|---|
| Average value (1 dimension) | Maximum value (1 dimension) | Change extent (1 dimension) | Average value (1 dimension) | Average value (1 dimension) | Maximum value (1 dimension) | Change extent (1 dimension) |

Therefore, the seven-dimensional emotion intensity acoustic feature vector of each intonational phrase may be obtained.

S3-2: Map the emotion intensity acoustic feature vector of each intonational phrase into an emotion intensity control vector.

Because a higher-dimensional emotion intensity feature vector is not easy to control, the obtained emotion intensity feature vector is mapped in this step, and converted into a lower-dimensional emotion intensity control vector (for example, the target dimension is three dimensions).

In this embodiment, a multidimensional scaling (multidimensional scaling, MDS) algorithm is used to perform the mapping. For each emotion category, a feature matrix M (M ∈ R3 ^{∗} 7) of a multidimensional scaling (multidimensional scaling, MDS) method is pre-trained based on a training corpus of this category. Assuming that an emotion intensity acoustic feature vector of a current intonational phrase is x (x ∈ R7 ^{∗} 1), finally an emotion control vector of the intonational phrase is y = M' ^{∗} x, to obtain a three-dimensional vector result (where M' is a feature matrix corresponding to an emotion category of the current intonational phrase). It may be found that emotion intensity is positively correlated with a first-dimensional feature and a second-dimensional feature (namely, MDS1 and MDS2) of the three-dimensional control vector, and is negatively correlated with a third-dimensional feature (MDS3). Therefore, to increase the emotion intensity, values of MDS1 and MDS2 may be increased, or a value of MDS3 may be decreased. On the contrary, to decrease the emotion intensity, MDS1 and MDS2 need to be decreased, or MDS3 needs to be increased.

S3-3: Determine emotion intensity of the key intonational phrase.

For the key intonational phrase determined in step S2-3, if the user presets preferred emotion intensity, the emotion intensity is set based on a value set by the user. Assuming that the emotion intensity that can be set by the user includes three levels: "high", "medium", and "low", the emotion control vector, namely, the emotion intensity, may be initialized by using a central value of a region representing "high", a central value of an entire space, and a central value of a region representing "low" in the emotion control vector space.

Herein, only three levels of emotion intensity are used as an example. In actual use, more levels of emotion intensity may alternatively be provided.

S3-4: Modify emotion intensity of a non-key intonational phrase in a sentence sequence.

The emotion category of the non-key intonational phrase is modified in step S2-4. Similarly, the emotion intensity of the non-key intonational phrase is modified in step S3-4, so that natural and coherent transition of emotion intensity may appear in emotional speech of adjacent intonational phrases. In this embodiment, an implementation method based on an emotion intensity level prediction model is used. As shown in FIG. 5-2B, the model is a two-layer LSTM neural network model, and may be trained based on a large amount of emotional speech data for a recognition task. An input of the model is obtained by splicing emotion categories and emotion intensity of left and right intonational phrases, a global emotion category and emotion intensity (namely, the emotion category and emotion intensity of the key intonational phrase), an emotion category of a current intonational phrase, the emotion acoustic feature vectors obtained in S3-1, and the like. An output is emotion intensity of the current intonational phrase (at three levels: "high", "medium", and "low"). The key intonational phrase is used as a center, and the emotion intensity level prediction model is used to sequentially modify emotion categories of left and right non-key intonational phrases of the key intonational phrase in the following steps, until intensity features of all non-key intonational phrases are modified.

A specific modification manner may be as follows:
(1) As described in S3-4, initial emotion intensity of a current non-key intonational phrase is predicted by using the emotion intensity level prediction model.
(2) A level corresponding to the emotion intensity control vector obtained in S3-2 is determined and compared with the result in (1), and the emotion intensity control vector of the current non-key intonational phrase is modified based on the comparison result.

Specifically, if the two are the same, the emotion intensity control vector that is of the current non-key intonational phrase and that is obtained in S3-2 may not be adjusted.

If the level corresponding to the emotion intensity obtained in S3-2 is lower than the result in (1), the emotion intensity control vector that is of the current non-key intonational phrase and that is obtained in S3-2 is adjusted, so that the corresponding emotion intensity is increased by a specific proportion (for example, the increased proportion is denoted as a, and 0 < a < 1).

If the level corresponding to the emotion intensity obtained in S3-2 is higher than the result in (1), the emotion intensity control vector that is of the current non-key intonational phrase and that is obtained in S3-2 is adjusted, so that the corresponding emotion intensity is decreased by a specific proportion (for example, the decreased proportion is denoted as b, and 0 < b < 1).

As described in S3-2, the emotion intensity control vector is a three-dimensional vector, where the first two dimensions are positively correlated, and the last dimension is negatively correlated. Therefore, in an example, a specific operation of increasing a may be multiplying values of MDS1 and MDS2 by (1+a), and multiplying a value of MDS3 by (1-a). Similarly, for decreasing b, a reverse operation is performed.

After the steps of the foregoing three phases are completed, steps of a fourth phase S4 may be performed to synthesize the speech information of the target text. Specifically, based on the text feature A output in the first phase S1, the emotion category that is of each intonational phrase and that is determined in the second phase S2, and the emotion intensity control vector that is of each intonational phrase and that is output in the third phase S3, a corresponding emotion acoustic feature may be predicted by using the pre-trained end-to-end acoustic model based on the deep neural network, and finally the emotional speech is generated by using the vocoder. Emotional speech corresponding to all corpus phrases are sequentially spliced into emotional speech corresponding to a large paragraph of text.

More specifically, as shown in FIG. 5-4A, the fourth phase S4 may specifically include the following steps.

S4-1: Predict an emotion acoustic feature of each intonational phrase based on the text feature A, the emotion category, and the emotion intensity control vector of each intonational phrase.

An emotion acoustic model is constructed by using an acoustic spectrum prediction network (Tacotron). The Tacotron type includes an encoder (encoder), a decoder (decoder), and an attention (attention) used as a bridge between the encoder and the decoder, as shown in FIG. 5-4B. An input of the model is the phoneme-based text feature A that is of each intonational phrase and that is obtained in S1, the emotion category that is of each intonational phrase and that is determined in S2, and the emotion intensity control vector that is of each intonational phrase and that is output in S3. An output feature is a linear spectral acoustic feature (1025 dimensions) of each intonational phrase at a frame level (for example, every 12.5 milliseconds is a frame).

S4-2: Synthesize emotion acoustic features of intonational phrases into the corresponding speech information by using the vocoder.

In this step, the vocoder (for example, a Griffin-Lim vocoder) is used to calculate the emotion acoustic features generated in S4-1, and synthesize speech information (or referred to as audio information) of each intonational phrase. The speech information of these intonational phrases is sequentially spliced to obtain the finally synthesized speech information corresponding to a large paragraph of target text.

Text feature processing, emotion feature prediction, and speech generation are performed on a per-intonational phrase basis. Compared with an original sentence-level unit, a smaller synthesis unit has greater operation flexibility, so that predicted emotion results are richer, and emotion performance between units is more controllable.

For emotion feature prediction, a manner of "first independently predicting each phrase unit and then performing modification based on a global emotion" can maximize diversity of local emotion features, and also ensure a controllable global emotion tone of a large paragraph of text, and synthesized emotional speech is more emotionally expressive.

The transition from one speech emotion to another needs both the conversion of emotion categories and the gradual transition of emotion intensity. By using the emotion intensity modification method of the present invention, changes of emotion intensity are more coherent.

With reference to FIG. 1B, any one of the foregoing method embodiments may be executed by the smart speech device 1. The memory 12 is configured to store computer instructions for performing the solutions of this application. The processor 11 is configured to execute any one of the method embodiments provided in this application when executing the computer instructions in the memory 12. The output module 13 is configured to output synthesized emotional speech information.

With reference to FIG. ID, any one of the foregoing method embodiments may be executed by the server 2. The memory 22 is configured to store computer instructions for performing the solutions of this application. The processor 21 is configured to perform any one of the method embodiments provided in embodiments of this application when executing the computer instructions in the memory 22.

With reference to FIG. ID, any one of the foregoing method embodiments may be jointly executed by the server 2 and the smart speech device 1. For example, the smart speech device 1 is configured to send a target text to the server 2. The server 2 is configured to determine an emotion category of each sentence in the target text, and send the emotion category to the smart speech device 1. The smart speech device 1 is further configured to generate speech information of the target text based on the emotion category sent by the server 2, and output the speech information.

The foregoing describes embodiments of this application from a perspective of a method and an entity device. The following describes, from a perspective of a functional module, a text information processing apparatus provided in an embodiment of this application.

From the perspective of a functional module, functional module division may be performed on the apparatus for performing the text information processing method in this application according to the foregoing method embodiments. For example, each functional module may be obtained through division corresponding to each function, or two or more functions may be integrated into one functional module. The integrated functional module may be implemented in a form of hardware, or may be implemented in a form of a software functional unit.

For example, when functional units are divided in an integrated manner, FIG. 6 is a schematic diagram of a structure of a text information processing apparatus. As shown in FIG. 6, an embodiment of a text information processing apparatus 600 in this application may include a sentence partition module 601, a determining module 602, and a speech generation module 603. The sentence partition 601 is configured to perform sentence partition on a target text to obtain a sentence sequence. The determining module 602 is configured to perform the following steps: determining an emotion category of the target text; separately determining an initial emotion category of each sentence in the sentence sequence; determining a first key sentence from the sentence sequence based on the emotion category of the target text and the initial emotion category of each sentence in the sentence sequence, where an initial emotion category of the first key sentence is the same as the emotion category of the target text; obtaining a modified emotion category of a target sentence based on the initial emotion category of the first key sentence and a text feature of the target sentence, where the target sentence is a sentence adjacent to the first key sentence in the sentence sequence, and an initial emotion category of the target sentence is different from the emotion category of the target text. The speech generation module 603 is configured to generate speech information of the target sentence based on the modified emotion category that is of the target sentence and that is determined by the determining module.

In a possible implementation, the sentence partition module 601 is configured to perform sentence partition on the target text according to an intonational phrase partition rule.

In a possible implementation, the emotion category of the target text is preset, or is obtained based on a text feature of the target text.

In a possible implementation, the determining module 602 is configured to determine an initial emotion category of a to-be-determined sentence based on a text feature of the to-be-determined sentence in the sentence sequence.

In a possible implementation, the determining module 602 is configured to: if an initial emotion category of another adjacent sentence, other than the first key sentence, of the target sentence is the same as the emotion category of the target text, obtain the modified emotion category of the target sentence based on the initial emotion category of the first key sentence, the initial emotion category of the another adjacent sentence, and the text feature of the target sentence.

In a possible implementation, the determining module 602 is further configured to: after the obtaining a modified emotion category of the target sentence, if the initial emotion category of the another adjacent sentence, other than the first key sentence, of the target sentence is different from the emotion category of the target text, obtain a modified emotion category of the another adjacent sentence based on the modified emotion category of the target sentence and a text feature of the another adjacent sentence. The speech generation module 603 is further configured to generate speech information of the another adjacent sentence based on the modified emotion category of the another adjacent sentence.

In a possible implementation, computer-executable instructions or the computer instructions in this embodiment of this application may also be referred to as application program code. This is not specifically limited in this embodiment of this application.

All or a part of the foregoing embodiments may be implemented by using software, hardware, firmware, or any combination thereof. When the software is used for implementation, all or a part of the embodiments may be implemented in a form of a computer program product.

The computer program product includes one or more computer instructions. When the computer-executable instructions are loaded and executed on a computer, all or a part of the procedures or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid State Disk, SSD)), or the like.

In the description, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device. In embodiments of this application, "a plurality of" means two or more than two.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Specifically, use of the word "example", "for example", or the like is intended to present a related concept in a specific manner.

In embodiments of this application, for ease of understanding, a plurality of examples are used for description. However, these examples are merely examples, but this does not mean that these examples are optimal implementations for implementing this application.

The technical solutions provided in this application are described in detail above. The principle and implementation of this application are described herein by using specific examples. The description about embodiments is merely provided to help understand the method and core ideas of this application. In addition, a person of ordinary skill in the art can make variations and modifications to this application in terms of the specific implementations and application scopes based on the ideas of this application. Therefore, the content of this specification shall not be construed as a limitation to this application.

## Claims

1. A text information processing method, comprising:
performing sentence partition on target text to obtain a sentence sequence;
determining an emotion category of the target text;
separately determining an initial emotion category of each sentence in the sentence sequence;
determining a first key sentence from the sentence sequence based on the emotion category of the target text and the initial emotion category of each sentence in the sentence sequence, wherein an initial emotion category of the first key sentence is the same as the emotion category of the target text;
obtaining a modified emotion category of a target sentence based on the initial emotion category of the first key sentence and a text feature of the target sentence, wherein the target sentence is a sentence adjacent to the first key sentence in the sentence sequence, and an initial emotion category of the target sentence is different from the emotion category of the target text; and
generating speech information of the target sentence based on the modified emotion category of the target sentence.

2. The method according to claim 1, wherein the performing sentence partition on target text comprises:
performing sentence partition on the target text according to an intonational phrase partition rule.

3. The method according to claim 1, wherein the emotion category of the target text is preset, or is obtained based on a text feature of the target text.

4. The method according to claim 1, wherein the separately determining an initial emotion category of each sentence in the sentence sequence is specifically:
determining an initial emotion category of a to-be-determined sentence based on a text feature of the to-be-determined sentence in the sentence sequence.

5. The method according to any one of claims 1 to 4, wherein the obtaining a modified emotion category of a target sentence based on the initial emotion category of the first key sentence, an initial emotion category of the target sentence, and a text feature of the target sentence is specifically:
if an initial emotion category of another adjacent sentence, other than the first key sentence, of the target sentence is the same as the emotion category of the target text, obtaining the modified emotion category of the target sentence based on the initial emotion category of the first key sentence, the initial emotion category of the another adjacent sentence, and the text feature of the target sentence.

6. The method according to any one of claims 1 to 5, wherein after the obtaining a modified emotion category of the target sentence, the method further comprises:
if the initial emotion category of the another adjacent sentence, other than the first key sentence, of the target sentence is different from the emotion category of the target text, obtaining a modified emotion category of the another adjacent sentence based on the modified emotion category of the target sentence and a text feature of the another adjacent sentence; and
generating speech information of the another adjacent sentence based on the modified emotion category of the another adjacent sentence.

7. A text information processing apparatus, comprising:
a sentence partition module, configured to perform sentence partition on target text to obtain a sentence sequence;
a determining module, configured to perform the following steps:
determining an emotion category of the target text;
separately determining an initial emotion category of each sentence in the sentence sequence;
determining a first key sentence from the sentence sequence based on the emotion category of the target text and the initial emotion category of each sentence in the sentence sequence, wherein an initial emotion category of the first key sentence is the same as the emotion category of the target text; and
obtaining a modified emotion category of a target sentence based on the initial emotion category of the first key sentence and a text feature of the target sentence, wherein the target sentence is a sentence adjacent to the first key sentence in the sentence sequence, and an initial emotion category of the target sentence is different from the emotion category of the target text; and
a speech generation module, configured to generate speech information of the target sentence based on the modified emotion category that is of the target sentence and that is determined by the determining module.

8. The apparatus according to claim 7, wherein the sentence partition module is configured to perform sentence partition on the target text according to an intonational phrase partition rule.

9. The apparatus according to claim 7, wherein the emotion category of the target text is preset, or is obtained based on a text feature of the target text.

10. The apparatus according to claim 7, wherein the determining module is configured to determine an initial emotion category of a to-be-determined sentence based on a text feature of the to-be-determined sentence in the sentence sequence.

11. The apparatus according to any one of claims 7 to 10, wherein the determining module is configured to: if an initial emotion category of another adjacent sentence, other than the first key sentence, of the target sentence is the same as the emotion category of the target text, obtain the modified emotion category of the target sentence based on the initial emotion category of the first key sentence, the initial emotion category of the another adjacent sentence, and the text feature of the target sentence.

12. The apparatus according to any one of claims 7 to 11, wherein the determining module is further configured to: after the obtaining a modified emotion category of the target sentence, if the initial emotion category of the another adjacent sentence, other than the first key sentence, of the target sentence is different from the emotion category of the target text, obtain a modified emotion category of the another adjacent sentence based on the modified emotion category of the target sentence and a text feature of the another adjacent sentence; and
the speech generation module is further configured to generate speech information of the another adjacent sentence based on the modified emotion category of the another adjacent sentence.

13. A computer device, comprising a processor and a memory, wherein when running computer instructions stored in the memory, the processor performs the method according to any one of claims 1 to 6.

14. A computer-readable storage medium, comprising instructions, wherein when the instructions are run on a computer, the computer is enabled to perform the method according to any one of claims 1 to 6.

15. A computer program product, comprising instructions, wherein when the instructions are run on a computer, the computer is enabled to perform the method according to any one of claims 1 to 6.
